# EUROPÄISCHE PATENTSCHRIFT

(11) **EP 2 494 229 B1**
(45) Veröffentlichungstag und Bekanntmachung des Hinweises auf die Patenterteilung: **24.07.2013**
(21) Anmeldenummer: 10795194.9
(22) Anmeldetag: 07.10.2010
(51) Int. Cl.: F16D 29/00

(54) **HYDROSTATAKTOR**
HYDROSTATIC ACTUATOR
ACTIONNEUR HYDROSTATIQUE

(30) Priorität: 29.10.2009 DE 102009051245
(43) Veröffentlichungstag der Anmeldung: 05.09.2012
(73) Patentinhaber: Schaeffler Technologies AG & Co. KG, 91074 Herzogenaurach (DE)
(72) Erfinder: FRANZ, Viktor, 76137 Karlsruhe (DE); EHRLICH, Matthias, 77815 Bühl (DE); ESLY, Norbert, 77815 Bühl (DE)
(86) Internationale Anmeldenummer: PCT/DE2010/001185
(87) Internationale Veröffentlichungsnummer: WO 2011/050767

(56) Entgegenhaltungen:
- EP-A2- 1 712 789
- EP-A2- 1 908 990
- DE-A1-102005 058 776
- DE-A1-102006 014 866

## Beschreibung

Die Erfindung betrifft einen Hydrostataktor mit einem Geberzylinder enthaltend ein Gehäuse und einen in dem Gehäuse axial verlagerbaren, eine mit Druckmittel befüllte Druckkammer mit Druck beaufschlagenden Kolben, mit einem einen Drehantrieb in eine Axialbewegung wandelnden Planetenwälzgetriebe mit einer Hülse, einer Getriebespindel und zwischen diesen abwälzenden Planetenwälzkörpern sowie mit einem das Planetenwälzgetriebe antreibenden Elektromotor mit einem gehäusefest verbundenen Stator und einem gegenüber diesem verdrehbaren Rotor.

Ein gattungsgemäßer Hydrostataktor ist aus der DE 197 00 935 A1 bekannt. Hierbei wird ein Kolben eines Geberzylinders mittels eines Elektromotors angetrieben, wobei die Drehbewegung des Elektromotors mittels eines Getriebes in Form eines Schneckengetriebes in eine axiale Bewegung gewandelt wird. Der Kolben wird dabei mittels eines an dem Schneckenrad angeordneten Exzenterbolzens angetrieben. DE 102006014866 A1 zeigt auch ein gattungsgemäßer Hydrostataktor.

Weiterhin ist aus der EP 0 320 621 A1 und EP171289 A2 ein Planetenwälzgetriebe grundsätzlich bekannt, das eine Gewindespindel, eine koaxial zu dieser angeordnete Hülse und zwischen diesen abwälzende Planetenräder aufweist. Das Planetengetriebe wird von einem Elektromotor drehangetrieben und übersetzt eine schnelle Drehbewegung in eine verlangsamte Axialbewegung.

Vor diesem Hintergrund besteht die Aufgabe der Erfindung in einer Verbesserung und Weiterentwicklung von vorzugsweise in Kraftfahrzeugen eingesetzten Hydrostataktoren insbesondere vor dem Hintergrund einer Erhöhung des Wirkungsgrades, der Verringerung des Bauraumbedarfs und der Erhöhung des Betriebsdrucks des Geberzylinders.

Die Aufgabe wird durch einen Hydrostataktor mit einem Geberzylinder enthaltend ein Gehäuse und einen in dem Gehäuse axial verlagerbaren, eine mit Druckmittel befüllte Druckkammer mit Druck beaufschlagenden Kolben, mit einem einen Drehantrieb in eine Axialbewegung wandelnden Planetenwälzgetriebe mit einer Hülse, einer Getriebespindel und zwischen diesen abwälzenden Planetenwälzkörpern sowie mit einem das Planetenwälzgetriebe antreibenden Elektromotor mit einem gehäusefest verbundenen Stator und einem gegenüber diesem verdrehbaren Rotor gelöst, wobei die Druckkammer ringförmig ausgebildet ist und das Planetenwälzgetriebe radial innerhalb der Druckkammer angeordnet ist. Es ergibt sich hierüber ein axial verkürzter Aufbau. Alternativ zu einer solchen Ausbildung könnte auch vorgesehen sein, dass das Planetenwälzgetriebe im Rotor des E-Motors angeordnet ist. Die vorliegend vorgeschlagene Unterbringung des Planetenwälzgetriebes radial innerhalb der Druckkammer hat gegenüber dieser alternativen Ausbildung den Vorteil, dass ein Hydrostataktor mit geringem Durchmesser vorgeschlagen werden kann. Grund hierfür ist, dass die alternative geschachtelte Ausbildung mit Rotor und Planetenwälzgetriebe mehr Bauraum benötigt, als die vorliegend vorgesehene geschachtelte Ausbildung von Planetenwälzgetriebe und Geberzylinder, insbesondere wenn die Hülse des Planetenwälzgetriebes im Wesentlichen dem Hub des Kolbens entspricht.

In vorteilhafter Weise werden dabei weiterhin der Elektromotor und das Planetengetriebe axial beabstandet voneinander koaxial angeordnet. Auf diese Weise kann der Durchmesser des Elektromotors an den Durchmesser des Geberzylinders angepasst werden, so dass dieser gleich oder kleiner als der Durchmesser des Geberzylinders ist. Wird die Hülse radial innerhalb der ringförmigen Druckkammer angeordnet, kann der dem Rotor zur Verfügung stehende Innenraum klein ausgebildet und der Elektromotor bei vorgegebenem Durchmesser vergleichsweise stark ausgelegt werden. Da der Flächenanteil der radial außen am Gehäuse des Geberzylinders angeordneten Druckkammer gegenüber einer Vollfläche mit einem geringen radial inneren Flächenanteil nur wenig geringer ist, kann der radial innerhalb dieser liegende Bauraum für die Hülse genutzt werden.

Der Hydrostataktor eignet sich als von einer Steuereinheit gesteuerter Geber zur Bereitstellung eines vorgebbaren Drucks über einen Druckanschluss in der Druckkammer und eine Druckleitung auf einen Nehmer zur axialen Verlagerung von Bauteilen wie beispielsweise einen Nehmerzylinder einer auf- oder zugedrückten in einem Antriebsstrang eines Kraftfahrzeugs beispielsweise zwischen einer Brennkraftmaschine und einem Getriebe angeordneten Reibungskupplung, einer in einem Getriebe angeordneten Schaltwelle oder Schaltwalze zur Schaltung von Gängen, einen Bremszylinder zur Betätigung von Bremsen und dergleichen.

Dabei kann vorteilhaft sein, wenn das Gehäuse des Geberzylinders und das Gehäuse des Elektromotors einteilig ausgebildet sind, indem diese beispielsweise mittels eines Gussverfahrens wie Druckguss, beispielsweise bei Verwendung von Aluminium oder anderen Leichtmetallen und deren Legierungen, oder Spritzguss, beispielsweise bei Verwendung von Kunststoff, hergestellt sind. Durch die einteilige Ausführung der Gehäuse wird die Stückzahl erniedrigt und die Stabilität der beiden Gehäuse mit den zwischen dem Geberzylinder und Elektromotor infolge der Abstützung des Kolbens am Gehäuse bei einer Beaufschlagung der Druckkammer mit Druck erhöht.

Es hat sich dabei als vorteilhaft gezeigt, wenn ein Reservoir zur Bevorratung von Druckmittel, das beispielsweise im entspannten Zustand des Kolbens bei Druckmittelverlust im hydraulischen System zwischen Geberzylinder, Druckleitung und Nehmerzylinder oder Temperaturschwankungen zwischen der Druckkammer und Reservoir ausgetauscht wird, in den Hydrostataktor integriert wird, ohne den Bauraum in nennenswerter Weise zu erhöhen. Beispielsweise kann bei vorgegebenem Durchmesser des Elektromotors der Durchmesser des Geberzylinders an den Durchmesser des Elektromotors angepasst werden, wobei das Reservoir in einem Ringraum radial außerhalb der Druckkammer vorgesehen ist. Dabei kann der Ringraum von einem längs der Drehachse liegenden Hohlzylinder geschnitten sein, in dem ein Anschluss für ein separates und/oder weiteres Reservoir beispielsweise im Falle einer ungünstigen Neigung des Hydrostataktors bei der Unterbringung in einem Kraftfahrzeug oder ein Balgen für den Druckausgleich mit der Umgebung vorgesehen sein kann, um Druckdifferenzen zwischen dem Reservoir und damit auch der Druckkammer im unbelasteten Zustand und der Umgebung auszugleichen.

Es hat sich bei einer axial vom Elektromotor beabstandeten Hülse des Planetenwälzgetriebes als besonders vorteilhaft erwiesen, wenn die Hülse drehfest und axial verlagerbar aufgenommen ist und der Kolben von der Hülse angetrieben wird. Dabei kann die Hülse im Gehäuse längsgeführt und drehfest mit dem Kolben verbunden sein. Infolgedessen wird die bezüglich des axialen Bauraums ausladende Getriebespindel vom Elektromotor angetrieben und bleibt in ihrer Lage axial fest, so dass diese beispielsweise über den gesamten axialen Bauraum ausgedehnt werden kann und an beiden Stirnseiten des Hydrostataktors gelagert und axial fixiert werden kann. Dabei kann die Länge des Hydrostataktors auf die Gewindespindel ohne Hub ausgelegt werden, der Hub der Hülse ist dabei identisch mit dem Hub des Kolbens, so dass auch durch die axiale Verlagerung der Hülse der axiale Bauraum nicht zunimmt und ein kompakt bauender Hydrostataktor vorgeschlagen werden kann.

Um einerseits den Elektromotor als elektronisch kommutierten Motor auslegen zu können und andererseits die Drehbewegung der Getriebespindel überwachen zu können, ist in dem Hydrostataktor eine Sensoreinrichtung vorgesehen, die zumindest eine Drehbewegung der Getriebespindel erfasst. Dabei kann die Sensoreinrichtung Sensoren umfassen, die als Hallsensoren einen Analogwinkel oder als Inkrementsensoren die Anzahl von Magnetimpulsen über einen Drehwinkel der Getriebespindel erfassen, wobei der Winkel aus der Anzahl der erfassten Magnetimpulse ermittelt wird. Zur Kalibrierung der Inkrementsensoren auf einen definierten Referenzpunkt wie Differenzwinkel können geeignete Maßnahmen getroffen werden, beispielsweise kann ein von dem Steuergerät erkannter Anschlag vorgesehen sein. Die Hall-Sensoren sind dabei aus einem infolge der besseren Verkabelungsmöglichkeit bevorzugt gehäusefest angeordneten Sensorteil und einem oder mehreren am hierzu beweglichen Bauteil angeordneten Sensiermagneten gebildet. Auf diese Weise wird entsprechend der Anzahl von über den Umfang der Getriebespindel verteilten Sensiermagneten, beziehungsweise aus diesen gebildeten, Magnetimpulse erzeugenden Magnetsegmenten ausreichende Winkelauflösungen des Verdrehwinkels der Getriebespindel mögfich.

Aus Gründen der elektrischen beziehungsweise elektronischen Störempfindlichkeit hat es sich als vorteilhaft erwiesen, wenn auf einer Platine der Vorortelektronik zumindest ein Sensor zur Erfassung von Betriebsdaten des Hydrostataktors angeordnet ist. Dabei kann die Platine direkt an einer optimalen Platzierung des Sensors angeordnet sein oder falls in diesem Bereich ein derartiger Bauraum nicht zur Verfügung steht, eine nicht elektronische Größe zur Ermittlung des Signals, beispielsweise eine mechanische oder intrinsische physikalische Größe in den Bereich der platzierten Platine geführt werden.

Alternativ oder zusätzlich zur Erfassung des Drehwinkels der Getriebespindel hat sich die Ermittlung des Hubs der Hülse beziehungsweise des Kolbens beispielsweise mittels eines Hall-Sensors als vorteilhaft erwiesen. Hierzu kann ein entsprechender Sensor direkt im Bereich zwischen Gehäuse und Kolben beziehungsweise Hülse vorgesehen sein, wobei die Kabel im Gehäuse zu einer gegebenenfalls vorhandenen Vorortelektronik zur Signalwandlung oder aus dem Gehäuse geleitet werden. Es hat sich insbesondere aus Gründen einer hierzu geringeren elektromagnetischen Störanfälligkeit eines derartigen Sensors jedoch als vorteilhaft erwiesen, wenn bei räumlich insbesondere aus Bauraumgründen entfernter Vorortelektronik der Sensor in der Nähe oder auf der Vorortelektronik platziert wird und die Bewegung des Kolbens oder der Hülse mittels eines Gestänges zum Sensor übertragen wird. Insbesondere aus Signalerfassungen des Drehwinkels der Getriebespindel und der axialen Verlagerung des Kolbens kann ein gegebenenfalls vorhandener Schlupf des Planetenwälzgetriebes ermittelt und kompensiert werden.

Zur alternativen oder redundanten Ermittlung der Wirkung des Kolbens auf die Druckkammer kann der Druck der Druckkammer mittels eines Drucksensors erfasst werden. Um auch den Druck direkt mittels eines auf einer räumlich von der Druckkammer entfernten Platine einer Vorortelektronik angeordneten Drucksensors erfassen zu können, kann im Gehäuse, insbesondere in einem einteiligen Gehäuse des Geberzylinders und des Elektromotors eine Anschlussbohrung an der Druckkammer vorgesehen sein, die sich bis zur Vorortelektronik erstreckt. Im Sinne der Erfindung kann die Vorortelektronik an einer dem Geberzylinder abgewandten Seite des Gehäuses des Elektromotors vorgesehen sein oder in einem nicht erforderlichen Freiraum des Gehäuses beziehungsweise der Gehäuse des Hydrostataktors platziert sein. Dabei hat sich als vorteilhaft erwiesen, wenn die Vorortelektronik im Bereich eines Deckels oder in diesem angeordnet ist, der das Gehäuse des Elektromotors nach der Montage des Elektromotors und der von dieser Seite montierten Bauteile verschließt. Dabei kann eine Steckverbindung zum Steuergerät in dem Deckel oder im Gehäuse vorgesehen. sein.

Die Erfindung wird anhand des in den Figuren 1 bis 5 dargestellten Ausführungsbeispiels näher erläutert. Dabei zeigen:
- Figur 1: eine Ansicht des efindungsgemäßen Hydrostataktors,
- Figur 2: eine Aufsicht auf den Hydrostataktor der Figur 1 mit einer Darstellung von Schnittlinien der Schnitte der nachfolgenden Figuren,
- Figur 3: einen Schnitt durch den Hydrostataktor der Figuren 1 und 2 längs der Schnittlinie A-A,
- Figur 4: einen Schnitt durch den Hydrostataktor der Figuren 1 und 2 längs der Schnittlinie B-B
und
- Figur 5: einen Schnitt durch den Hydrostataktor der Figuren 1 und 2 längs der Schnittlinie C-C.

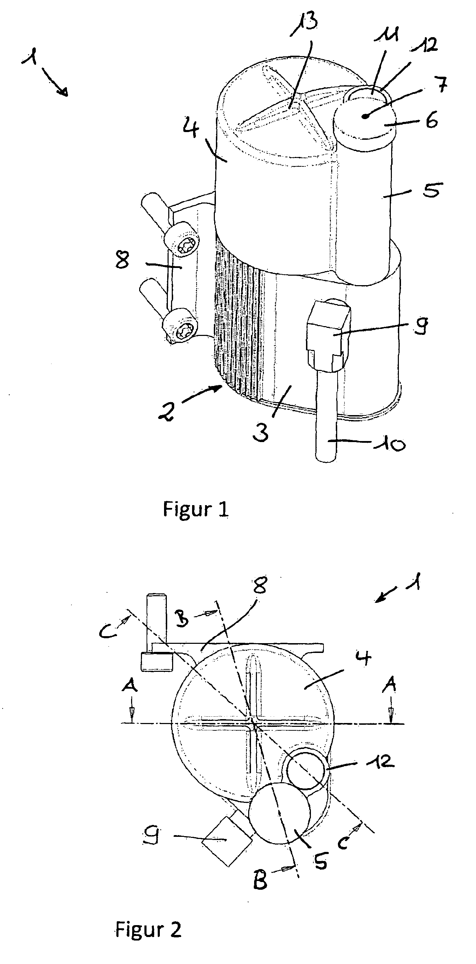

Figur 1 zeigt den Hydrostataktor 1 in dreidimensionaler Ansicht mit dem einteiligen aus dem Gehäuse des Elektromotors 2 und dem Gehäuse des Geberzylinders gebildeten Gehäuse 3 und dem Gehäuseabschnitt 4 mit dem Reservoirdom 5, der mittels der Abdeckkappe 6 mit der Druckausgleichsöffnung 7 verschlossen ist. Die mittels der weiteren Abdeckkappe 11 verschlossene Montageöffnung 12 dient der Montage von Bauteilen und der Funktionsprüfung insbesondere der Sensorik des Hydrostataktors 1.

An dem Gehäuse 3 ist der Halter 8 zur Befestigung des Hydrostataktors 1 an einem gehäusefesten Bauteil beispielsweise einer Spritzwand eines Kraftfahrzeugs befestigt. An dem Gehäuse 3 ist weiterhin der mit der Druckkammer des Geberzylinders verbundene Druckanschluss 9 der Druckleitung 10, die die Verbindung zu einem nicht dargestellten Nehmerzylinder herstellt, beispielsweise als Schnellkupplung befestigt. Der Gehäuseabschnitt weist innen ein Lager zur Aufnahme der Getriebespindel auf und ist außen durch die Verstärkungsrippen 13 verstärkt. Der Gehäuseabschnitt 4 kann mittels eines Druck- oder Spritzgussverfahrens aus den Werkstoffen Leichtmetallen wie Aluminium und deren Legierungen oder aus Kunststoff hergestellt sein.

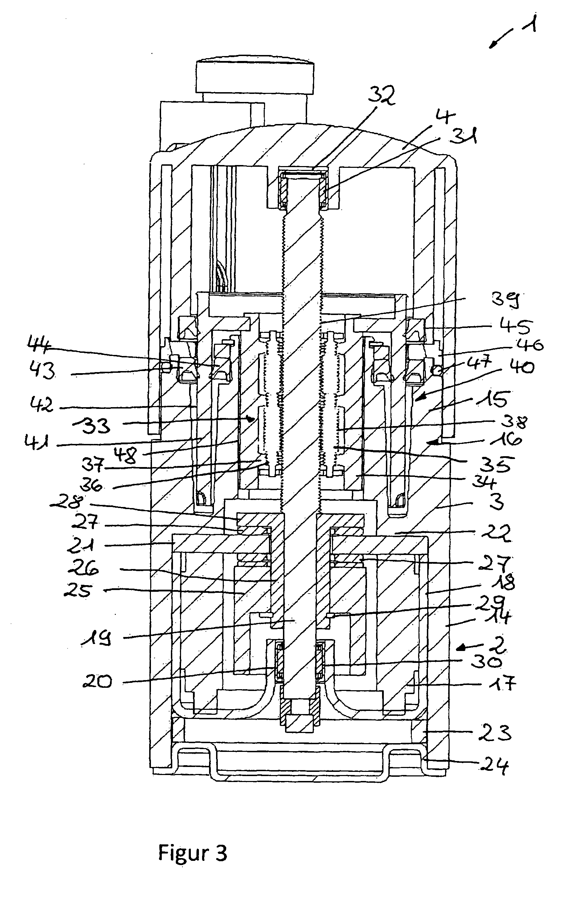

Figur 2 zeigt den Hydrostataktor der Figur 1 in Aufsicht mit dem Gehäuseabschnitt 4 mit dem Reservoirdom 5 und der Montageöffnung 12 sowie dem an dem Gehäuse 3 (Figur 1) befestigten Halter 8 und dem Druckanschluss 9. Die Schnittlinien A-A, B-B, C-C geben die Schnittflächen der in den Figuren 3, 4, 5 dargestellten Schnitte des Hydrostataktors wieder.

Figur 3 zeigt den Hydrostataktor 1 im Schnitt entlang der Schnittline A-A der Figur 2 mit dem aus dem Gehäuse 14 des Elektromotors 2 und dem Gehäuse 15 des Geberzylinders 16 gebildeten, einteiligen Gehäuse 3 und dem auf diesem befestigten, beispielsweise verschraubten, verpressten oder verschweißten Gehäusesabschnitt 4.

Der Stator 17 des Elektromotors 2 ist radial innen auf der Zentrierhülse 18 aufgenommen, die zugleich die Zentrierung und Lagerung der Getriebespindel 19 mittels des axialen angeformten Lagerdoms 20 übernimmt. Der Stator 17 ist axial zwischen der Lagerscheibe 21 und der Zentrierhülse 18 verspannt und drehfest in dieser aufgenommen. Die Zentrierhülse 18 fixiert die Lagerscheibe 21 axial an dem Anschlag 22 des Gehäuses 3 und ist selbst axial mittels der Anschlagscheibe 23 und dem mit dem Gehäuse 3 verbundenen wie verschraubten Deckel 24 fixiert.

Der radial innerhalb des Stators 17 angeordnete Rotor 25 ist radial innen axial fest auf der Lagerhülse 26 aufgenommen und zentriert. Die Lagerhülse 26 ist mittels der Lagerscheibe 21 axial fest und verdrehbar aufgenommen. Hierzu sind an der Lagerscheibe 21 beidseitig Axiallager 27 - hier Nadellager - angeordnet, die einerseits mit dem Ringbord 28 der Lagerhülse 26 und andererseits mit dem Rotor 25, der axial auf der Lagerhülse 26 mittels der Sicherungsscheibe 29 fixiert ist, einen Lagersitz bilden. Die Lagerhülse 26 ist drehfest mit der Getriebespindel 19 verbunden, beispielsweise auf diese aufgeschrumpft, so dass die radiale Zentrierung der Lagerhülse 26 und damit des Rotors 25 mittels des Radiallagers 30 über die Zentrierhülse 18 am Gehäuse 3 und die axiale Lagerung der Getriebespindel 19 am Gehäuse über die Lagerscheibe 21 erfolgt. Die zweite Lagerung der Getriebespindel 19 erfolgt mittels des Radiallagers 31 im Lagerdom 32 des Gehäuseabschnitts 4.

Axial beabstandet zu dem Elektromotor 2 ist das Planetenwälzgetriebe 33 angeordnet, das durch die Getriebespindel 19, die Hülse 34 und die zwischen diesen abwälzenden Planetenwälzkörper 35 gebildet wird. Zur Wandlung der von dem Rotor 25 in eine Drehbewegung versetzten Getriebespindel 19 in eine axiale Bewegung der Hülse 34 sind die Planetenwälzkörper mit einer Verzahnung 36, die mittels einer groben Verzahnung 37 der Hülse 34 kämmt, und mit einem Feingewinde 38, die mit dem Außengewinde 39 der Getriebehülse kämmt, ausgestattet.

Radial außerhalb des Planetenwälzgetriebes 33 ist der Geberzylinder 40 angeordnet, der den axial durch die Hülse 34 verlagerten Kolben 41 und die durch das Gehäuse 15 und den Kolben 41 gebildete, mit dem Druckanschluss 9 (Figur 1) versehene Druckkammer 42 enthält. Kolben 41 und Druckkammer 42 sind jeweils ringförmig um die Hülse 34 angeordnet, Die Druckkammer 42 ist mittels zwischen Kolben 41 und Gehäuse 15 angeordneter Nutringdichtungen 43, 44 nach außen abgedichtet. Eine weitere Nutringdichtung 45 dichtet den Kolben 41 gegenüber dem Innenraum des Gehäuseabschnitts 4 ab. Zwischen den beiden Nutringdichtungen 43, 44 ist der Auflaufring 46 vorgesehen. Der Gehäuseabschnitt 4 ist gegenüber dem Gehäuse 15 mittels der Ringdichtung 47 abgedichtet.

In dem gezeigten Ausführungsbeispiel ist der Geberzylinder 40 in vollständig betätigtem Zustand dargestellt, das heißt, der Kolben 41 wird zum Druckaufbau in Richtung des Elektromotors 2 verlagert, was einer gezogenen Anordnung des Kolbens 41 gleichkommt, so dass ein Kraftkreislauf der Druckkräfte außerhalb des Elektromotors zustande kommt und infolgedessen im Wesentlichen frei von Axialkräften betrieben werden kann. Die axial vom Planetenwälzgetriebe 33 zur Verlagerung des Kolbens 41 aufgebrachte Kraft wird von der Lagerscheibe 21 am Gehäuse 3 abgestützt die vom Kolben 41 auf die Druckkammer 42 ausgeübte Druckkraft wird ebenso in das Gehäuse 3 eingeleitet, so dass ein kurzer Kräftekreislauf mit geringer Elastizität gebildet wird.

Um eine Verdrehung der Hülse infolge von Schlepp- und Reibmomenten zu verhindern, wird die Hülse 34 im Gehäuse 15 gegen Verdrehung gesichert aufgenommen und geführt. Hierzu ist zwischen Hülse 34 und Gehäuse 15 die Längsführung 48 vorgesehen, die aus einer oder mehrerer in Umfangsrichtung verteilten Längsnuten gebildet sein kann, in die hierzu komplementäre Längsfedern radial eingreifen. Um insbesondere das tribologische Verhalten der Nutringdichtungen 43, 44 zu verbessern, kann die Längsführung 48 geringfügig spiralig ausgebildet sein, beispielswese einen geringen Winkelanteil in Umfangsrichtung, beispielsweise wenige Grad, aufweisen.

Aus dem Stator 17, dem Rotor 25 und dem Planetenwälzgetriebe 33 kann eine Baueinheit gebildet werden, die in das Gehäuse 3 von einer Seite eingeschoben wird und anschließend das Gehäuse von dieser Seite mittels des Deckels 24 verschlossen wird. Von der anderen Seite wird der Geberzylinder 40 montiert, wobei der Kolben 41 zumindest axial fest mit der Hülse 34 verbunden, beispielsweise verstemmt, verrastet oder in diese eingehängt wird.

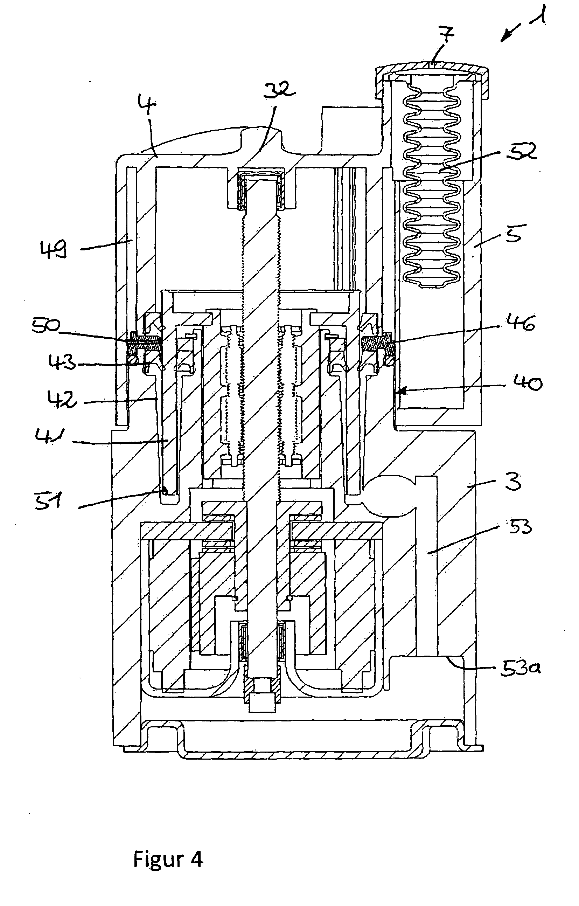

Figur 4 zeigt den Hydrostataktor 1 entlang der Schnittlinie B-B der Figur 2 im Schnitt. Aus diesem Schnittwinkel wird die Anordnung des Reservoirs 49 für den Betrieb des hydraulischen Systems, in das der Hydrostataktor 1 über die Druckkammer 42 eingebunden ist, deutlich. Das Reservoir 49 erstreckt sich radial außerhalb der Druckkammer 42 im Gehäuseabschnitt 4 und wird mittels des Auflaufrings 46 begrenzt. Ein Austausch der Volumina des Reservoirs 49 und der Druckkammer 42 erfolgt in Ruhestellung des Kolbens 41, der hier im vollständig betätigten Zustand dargestellt ist. In der Ruhestellung wird der Kolben 41 radial so weit in Richtung des Lagerdoms 32 verlagert, dass dieser die Nutringdichtung 43 passiert und das Reservoir 49 über eine oder mehrere im Auflaufring 46 vorgesehene Kanäle 50 mit der Druckkammer 42 verbunden wird. Zur besseren Steuerung des Übergangs zwischen verschlossener und geöffneter Verbindung können im Kolben 41 sogenannte Schnüffelnuten 51 vorgesehen sein.

Mit dem Reservoir 49 ist der Reservoirdom 5 an nicht gezeigter Stelle beispielsweise mittels Öffnungen verbunden. Der Reservoirdom 5 weist den Faltenbalg 52 auf, der an einer Seite mit dem Reservoir 49 und auf der anderen Seite über die Druckausgleichsöffnung 7 mit der Umgebung in Verbindung steht, so dass ein Druckunterschied des Reservoirs 49 und der Umgebung ausgeglichen wird.

Aus dem in Figur 4 gezeigten Schnitt wird weiterhin die axiale Erweiterung 53 der Druckkammer 42 im Gehäuse 3 deutlich, die sich bis zu dem stirnseitigen Absatz 53a erstreckt, an dem eine - hier nicht gezeigte - Vorortelektronik platziert ist, so dass die Erweiterung direkt einem auf einer Platine der Vorortelektronik vorgesehenen Drucksensor zur Erfassung des Arbeitsdrucks der Druckkammer 42 und damit des Geberzylinders 40 zugeführt wird und der Drucksensor ohne elektrische Leitungen eingesetzt werden kann.

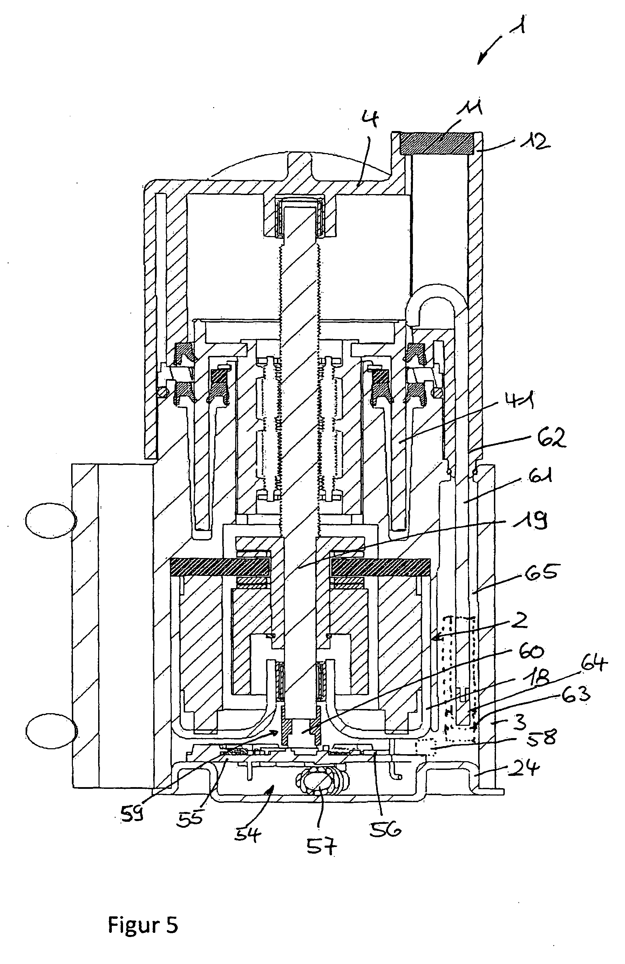

Figur 5 zeigt den Hydrostataktor 1 entlang der Schnittlinie C-C der Figur 2 mit Blick auf die Sensoreinrichtung 54, die auf der Vorortelektronik 55, die zumindest aus einer elektronischen Platine 56 gebildet ist, auf der die notwendigen elektronischen Bauteile zur Steuerung und Stromversorgung des Elektromotors 2, der Verarbeitung und/oder Übertragung der von den Sensoren erfassten Messsignale angeordnet sind, angeordnet sein kann. Die Vorortelektronik 55 weist einen Anschluss 57 auf, der durch das Gehäuse 3 oder den Deckel 24 geführt sein kann, und Signal- und Versorgungsleitungen enthält und mit einem externen Steuergerät verbunden ist. Die Vorortelektronik 55 ist zwischen der Zentrierhülse 18 und dem Deckel 24 angeordnet und fixiert.

In dem gezeigten Ausführungsbeispiel ist vorgesehen, alle Sensoren zur Steuerung des Hydrostataktors auf der Platine 56 und damit ohne Verbindungsleitung zentral zu positionieren. Hierzu ist auf der Platine 56 der Drucksensor 58 aufgenommen, der mit der den an der Erweiterung 53 wie Anschlussbohrung der Figur 4 anstehenden Druck erfasst und die Erweiterung 53 abdichtet. Im Weiteren erfasst der auf der Platine 56 angeordnete Drehwinkelsensor 59 den Drehwinkel der Getriebespindel 19. Der Drehwinkelsenor 59 kann ein Hall-Sensor sein, wobei an der Getriebespindel 19 der zugehörige Sensiermagnet 60 angeordnet ist. Zur Erfassung des Axialwegs des Kolbens 41 ist an diesem das Gestänge 61 verbunden wie eingehängt oder verrastet, das axial in der Führung 62 des Gehäuseabschnitts 4 geführt ist und bis an die Platine 56 herangeführt wird, so dass der nur angedeutete, auf der Platine 56 aufgenommene, sich in den im Gehäuse 3 gebildeten Freiraum 65 erstreckenden Axialwegsensor 63 den Axialweg des Kolbens 41 räumlich wie axial beabstandet zu diesem erfasst. Der Axialwegsensor 63 ist bevorzugt als Hall-Sensor ausgebildet und erfasst den Axialweg abhängig vom Abstand des an dem Gestänge 61 montierten Sensiermagnenten 64. Zur Montage des Gestänges 61 und Funktionsüberprüfung des Axialwegsensors 63 ist in dem Gehäuseabschnitt 4 die mittels der Abdeckkappe 11 verschlossene Montageöffnung 12 vorgesehen.

**Bezugszeichenliste**

| | |
|---|---|
| 1 | Hydrostataktor |
| 2 | Elektromotor |
| 3 | Gehäuse |
| 4 | Gehäuseabschnitt |
| 5 | Reservoirdom |
| 6 | Abdeckkappe |
| 7 | Druckausgleichsöffnung |
| 8 | Halter |
| 9 | Druckanschluss |
| 10 | Druckleitung |
| 11 | Abdeckkappe |
| 12 | Montageöffnung |
| 13 | Verstärkungsrippe |
| 14 | Gehäuse |
| 15 | Gehäuse |
| 16 | Geberzylinder |
| 17 | Stator |
| 18 | Zentrierhülse |
| 19 | Getriebespindel |
| 20 | Lagerdom |
| 21 | Lagerscheibe |
| 22 | Anschlag |
| 23 | Anschlagscheibe |
| 24 | Deckel |
| 25 | Rotor |
| 26 | Lagerhülse |
| 27 | Axiallager |
| 28 | Ringbord |
| 29 | Sicherungsscheibe |
| 30 | Radiallager |
| 31 | Radiallager |
| 32 | Lagerdom |
| 33 | Planetenwälzgetriebe |
| 34 | Hülse |
| 35 | Planetenwälzkörper |
| 36 | Verzahnung |
| 37 | Verzahnung |
| 38 | Feingewinde |
| 39 | Außengewinde |
| 40 | Geberzylinder |
| 41 | Kolben |
| 42 | Druckkammer |
| 43 | Nutringdichtung |
| 44 | Nutringdichtung |
| 45 | Nutringdichtung |
| 46 | Auflaufring |
| 47 | Ringdichtung |
| 48 | Längsführung |
| 49 | Reservoir |
| 50 | Kanal |
| 51 | Schnüffelnut |
| 52 | Faltenbalg |
| 53 | Erweiterung |
| 53a | Absatz |
| 54 | Sensoreinrichtung |
| 55 | Vorortelektronik |
| 56 | Platine |
| 57 | Anschluss |
| 58 | Drucksensor |
| 59 | Drehwinkelsensor |
| 60 | Sensiermagnet |
| 61 | Gestänge |
| 62 | Führung |
| 63 | Axialwegsensor |
| 64 | Sensiermagnet |
| 65 | Freiraum |
| A-A | Schnittlinie |
| B-B | Schnittlinie |
| C-C | Schnittlinie |

## Patentansprüche

1. Hydrostataktor (1) mit einem Geberzylinder (40) enthaltend ein Gehäuse (15) und einen in dem Gehäuse (15) axial verlagerbaren, eine mit Druckmittel befüllte Druckkammer (42) mit Druck beaufschlagenden Kolben (41), mit einem einen Drehantrieb in eine Axialbewegung wandelnden Planetenwälzgetriebe (33) mit einer Hülse (34), einer Getriebespindel (19) und zwischen diesen abwälzenden Planetenwälzkörpern (35) sowie mit einem das Planetenwälzgetriebe (33) antreibenden Elektromotor (2) mit einem gehäusefest verbundenen Stator (17) und einem gegenüber diesem verdrehbaren Rotor (25), **dadurch gekennzeichnet, dass** die Druckkammer (42) ringförmig ausgebildet ist und das Planetenwälzgetriebe (33) radial innerhalb der Druckkammer (42) angeordnet ist.

2. Hydrostataktor (1) nach Anspruch 1, **dadurch gekennzeichnet, dass** der Elektromotor (2) und das Planetenwälzgetriebe (33) axial beabstandet voneinander koaxial angeordnet sind.

3. Hydrostataktor (1) nach Anspruch 1 oder 2, **dadurch gekennzeichnet, dass** das Gehäuse (15) des Geberzylinders (40) und das Gehäuse (14) des Elektromotors (2) einteilig ausgebildet sind.

4. Hydrostataktor (1) nach einem der Ansprüche 1 bis 3, **dadurch gekennzeichnet, dass** radial außerhalb der Druckkammer (42) ein Reservoir (49) für das Druckmittel vorgesehen ist.

5. Hydrostataktor (1) nach einem der Ansprüche 1 bis 4, **dadurch gekennzeichnet, dass** die Hülse 34 drehfest und axial verlagerbar aufgenommen ist und der Kolben (41) von der Hülse (34) axial verlagert wird.

6. Hydrostataktor (1) nach einem der Ansprüche 1 bis 5, **dadurch gekennzeichnet, dass** in dem Hydrostataktor (1) eine Sensoreinrichtung (54) vorgesehen ist, die zumindest eine Drehbewegung der Getriebespindel (19) erfasst.

7. Hydrostataktor (1) nach Anspruch 6, **dadurch gekennzeichnet, dass** die Sensoreinrichtung (54) einen Axialweg des Kolbens (41) erfasst.

8. Hydrostataktor (1) nach Anspruch 6 oder 7, **dadurch gekennzeichnet, dass** die Sensoreinrichtung (54) einen Druck in der Druckkammer (42) erfasst.

9. Hydrostataktor (1) nach einem der Ansprüche 6 bis 8, **dadurch gekennzeichnet, dass** an der dem Geberzylinder (40) abgewandten Seite des Gehäuses (14) des Elektromotors (2) eine Vorortelektronik (55) vorgesehen ist.

10. Hydrostataktor (1) nach Anspruch 9, **dadurch gekennzeichnet, dass** auf einer Platine (56) der Vorortelektronik (55) zumindest ein Sensor zur Erfassung von Betriebsdaten des Hydrostataktors (1) angeordnet ist.

## Claims

1. Hydrostatic actuator (1) having a master cylinder (40), which master cylinder comprises a housing (15) and a piston (41) which is axially displaceable in the housing (15) and which can exert pressure on a pressure-medium-filled pressure chamber (42), having a planetary rolling-contact gearing (33), which planetary rolling-contact gearing converts a rotary drive into an axial movement and has a sleeve (34), a gearing spindle (19) and rolling planet bodies (35) which roll between said sleeve and gearing spindle, and also having an electric motor (2), which electric motor drives the planetary rolling-contact gearing (33) and has a stator (17) fixed with respect to the housing and has a rotor (25) rotatable relative to said stator, **characterized in that** the pressure chamber (42) is of annular form and the planetary rolling-contact gearing (33) is arranged radially within the pressure chamber (42).

2. Hydrostatic actuator (1) according to Claim 1, **characterized in that** the electric motor (2) and the planetary rolling-contact gearing (33) are arranged axially spaced apart from one another and coaxially.

3. Hydrostatic actuator (1) according to Claim 1 or 2, **characterized in that** the housing (15) of the master cylinder (40) and the housing (14) of the electric motor (2) are formed in one piece.

4. Hydrostatic actuator (1) according to one of Claims 1 to 3, **characterized in that** a reservoir (49) for the pressure medium is provided radially outside the pressure chamber (42).

5. Hydrostatic actuator (1) according to one of Claims 1 to 4, **characterized in that** the sleeve (34) is held in a rotationally fixed and axially displaceable manner, and the piston (41) is displaced axially by the sleeve (34).

6. Hydrostatic actuator (1) according to one of Claims 1 to 5, **characterized in that**, in the hydrostatic actuator (1), there is provided a sensor device (54) which detects at least a rotational movement of the gearing spindle (19).

7. Hydrostatic actuator (1) according to Claim 6, **characterized in that** the sensor device (54) detects an axial travel of the piston (41).

8. Hydrostatic actuator (1) according to Claim 6 or 7, **characterized in that** the sensor device (54) detects a pressure in the pressure chamber (42).

9. Hydrostatic actuator (1) according to one of Claims 6 to 8, **characterized in that** on-site electronics (55) are provided on that side of the housing (14) of the electric motor (2) which faces away from the master cylinder (40).

10. Hydrostatic actuator (1) according to Claim 9, **characterized in that** at least one sensor for detecting operating data of the hydrostatic actuator (1) is arranged on a printed circuit board (56) of the on-site electronics (55).

## Revendications

1. Actionneur hydrostatique (1) comprenant un maître-cylindre (40) incluant un boîtier (15) et un piston (41) positionnable dans le sens axial dans le boîtier (15), lequel applique une pression à une chambre de compression (42) remplie d'un fluide de pression, comprenant un engrenage à rouleaux planétaires (33) qui convertit un entraînement rotatif en un mouvement axial, avec une douille (34), une broche d'engrenage (19) et des corps de rouleaux planétaires (35) qui roulent entre celles-ci ainsi qu'avec un moteur électrique (2) entraînant l'engrenage à rouleaux planétaires (33), lequel comprend un stator (17) fixé à demeure au boîtier et un rotor (25) qui peut tourner par rapport à celui-ci, **caractérisé en ce que** la chambre de compression (42) est réalisée en forme d'anneau et l'engrenage à rouleaux planétaires (33) est disposé dans le sens radial à l'intérieur de la chambre de compression (42).

2. Actionneur hydrostatique (1) selon la revendication 1, **caractérisé en ce que** le moteur électrique (2) et l'engrenage à rouleaux planétaires (33) sont disposés de manière coaxiale et espacés axialement l'un de l'autre.

3. Actionneur hydrostatique (1) selon la revendication 1 ou 2, **caractérisé en ce que** le boîtier (15) du maître-cylindre (40) et le boîtier (14) du moteur électrique (2) sont réalisés d'une seule pièce.

4. Actionneur hydrostatique (1) selon l'une des revendications 1 à 3, **caractérisé en ce qu'**un réservoir (49) est prévu pour le fluide de pression dans le sens radial à l'extérieur de la chambre de compression (42).

5. Actionneur hydrostatique (1) selon l'une des revendications 1 à 4, **caractérisé en ce que** la douille (34) est logée en rotation solidaire et positionnable dans le sens axial et le piston (41) est positionné dans le sens axial par la douille (34).

6. Actionneur hydrostatique (1) selon l'une des revendications 1 à 5, **caractérisé en ce que** dans l'actionneur hydrostatique (1) est prévu un dispositif de détection (54) qui capte au moins un mouvement de rotation de la broche d'engrenage (19).

7. Actionneur hydrostatique (1) selon la revendication 6, **caractérisé en ce que** le dispositif de détection (54) capte une course axiale du piston (41).

8. Actionneur hydrostatique (1) selon la revendication 6 ou 7, **caractérisé en ce que** le dispositif de détection (54) capte une pression dans la chambre de compression (42).

9. Actionneur hydrostatique (1) selon l'une des revendications 6 à 8, **caractérisé en ce qu'**une électronique locale (55) est prévue sur le côté du boîtier (14) du moteur électrique (2) qui est à l'opposé du maître-cylindre (40).

10. Actionneur hydrostatique (1) selon la revendication 9, **caractérisé en ce qu'**au moins un détecteur destiné à capter des données opérationnelles de l'actionneur hydrostatique (1) est disposé sur une platine (56) de l'électronique locale (55).
